# EUROPÄISCHE PATENTSCHRIFT

(11) **EP 1 225 080 B1**
(45) Veröffentlichungstag und Bekanntmachung des Hinweises auf die Patenterteilung: **04.07.2007**
(21) Anmeldenummer: 01127282.0
(22) Anmeldetag: 16.11.2001
(51) Int. Cl.: B60L 7/10, H02H 3/08, H01L 23/40, H05K 7/20

(54) **Schutzelement in einem elektrischen Schaltkreis**
Protection element in an electric circuit
Elément de protection dans un circuit électrique

(30) Priorität: 22.01.2001 DE 20101106 U
(43) Veröffentlichungstag der Anmeldung: 24.07.2002
(73) Patentinhaber: DBK David + Baader GmbH, 76870 Kandel (DE)
(72) Erfinder: Buchlaub, Norbert, 76767 Hagenbach (DE); Vetter, Leonhard, 76829 Landau (DE)
(74) Vertreter: Grünecker, Kinkeldey, Stockmair & Schwanhäusser Anwaltssozietät

(56) Entgegenhaltungen:
- DE-A- 19 722 602
- DE-A- 19 742 426
- US-A- 3 794 950
- US-A- 5 309 979

## Beschreibung

Die vorliegende Erfindung bezieht sich auf ein Schutzelement in einem elektrischen Schaltkreis zur Ableitung von überschüssiger elektrischer Energie nach dem Oberbegriff des Anspruchs 1.

Schutzelemente in elektrischen Schaltkreisen sind beispielsweise in der elektrischen Antriebstechnik im Zusammenhang mit Frequenzumrichtern bekannt, wo sie mit Ohm'schen Widerstandselementen verwendet werden, um im Bremsbetrieb überschüssige elektrische Energie abzuleiten. Die Frequenzumrichter sind für die Drehzahl /Drehmomentenregelung sowie für die optimale Magnetisierung der Asynchronmotoren im elektrischen Antrieb zuständig. Außerdem übernehmen sie Überwachungsaufgaben wie z.B. die Erkennung von Kurz-/Erdschlüssen, Unter-/Überspannungen und die Meldung von Belastungszuständen des Motors.

Ein wesentlicher Nachteil dieser Ohm'schen Widerstandselemente besteht darin, dass sie aufgrund der häufig wechselnden Belastungen im Umrichter einem starken Alterungsprozess unterliegen, was sich mit der Zeit in ändernden Widerstandswerten niederschlägt. Außerdem weisen sie nur eine geringe Überspannungsfestigkeit und eine schlechte thermische Überlastbarkeit auf.

Herkömmliche Schutzelemente mit Ohm'schen Widerständen besitzen folglich den wesentlichen Nachteil, dass sie sich nur bedingt für die stark und häufig wechselnden Belastungszustände eignen, denen sie in Frequenzumrichtern ausgesetzt sind.

Aus der deutschen Offenlegungsschrift DE 197 42 426 A1 ist ein elektrischer Bremswiderstand bekannt, der einen Leitwert aufweist, welcher bei ansteigender Temperatur des Bremswiderstandes abnimmt, und beispielsweise einen PTC-Widerstand umfasst.

Die deutsche Offenlegungsschrift DE 197 22 602 A1 offenbart ein wärmeableitendes Gehäuse zur Aufnahme von elektrischen und elektronischen Bauteilen, das aus einem im Wesentlichen kastenförmigen Strangpressprofil aus Leichtmetall gebildet ist.

Aus der US-amerikanischen Patentschrift 5,309,979 ist eine Kühlkörperanordnung bekannt, bei der Leistungselektronikbauteile auf einer Leiterplatte montiert sind und in einem Gehäuse eingeschlossen sind. Das Leistungsbauteil ist zwischen einem Kühlkörper und einer Federklemme von beiden Seiten umschlossen, so dass die Wärme an eine Gehäuseaußenseite abgeleitet werden kann.

Aus der US-amerikanischen Patentschrift 3,794,950 schließlich ist ein Überstromsensor, der entweder ein PTC- oder ein NTC-Element enthält, bekannt, der zusammen mit einer entsprechenden Steuerung eine Heizung vor Wärmeüberbelastung schützt.

Aufgabe der vorliegenden Erfindung ist es daher, ein Schutzelement in einem elektrischen Schaltkreis bereitzustellen, das eine hohe Dauerbelastbarkeit und Überspannungsfestigkeit aufweist.

Diese Aufgabe wird mit einem Schutzelement mit den Merkmalen des Anspruchs 1 gelöst. Ein Vorteil des erfindungsgemäßen Schutzelementes besteht darin, dass es im Vergleich zu einem herkömmlichen Schutzelement eine wesentlich höhere Dauerbelastbarkeit, Spannungsfestigkeit und Alterungsbeständigkeit besitzt.

Ein weiterer Vorteil des erfindungsgemäßen Schutzelementes besteht in der PTC-Widerstandselementen innewohnenden charakteristischen Eigenschaft, bei steigender Belastung und dadurch steigender Temperatur auch einen höheren Widerstandswert anzunehmen. Durch diesen erhöhten Widerstandswert können auch längerfristige Überlastungen ohne Beschädigung des Widerstandselements abgefangen werden. Diese Eigenschaft zeichnet das erfindungsgemäße Schutzelement im Vergleich zu herkömmlichen Schutzelementen mit einem Ohm'schen Widerstand aus.

Gemäß einer bevorzugten Ausführungsform des Schutzelementes ist sein PTC-Widerstandselement hinsichtlich seiner Spannungsfestigkeit so ausgebildet, dass es in Frequenzumrichtern zur Ableitung von auftretenden Spannungsspitzen einsetzbar ist. Dadurch übernimmt es in Zwischenkreisen von Frequenzumrichtern eine wirkungsvolle Schutzfunktion, indem es einerseits im Bremsbetrieb die Kondensatoren des Zwischenkreises vor Spannungsüberhöhung schützt und andererseits im Normalbetrieb des Frequenzumrichters auftretende größere Spannungsschwankungen, sogenannte Spannungsspitzen, ableitet.

Eine bevorzugte Ausführungsform des erfindungsgemäßen Schutzelementes besteht darin, dass sein PTC-Widerstandselement eine hohe Spannungsfestigkeit von typischerweise größer als 600 V aufweist.

Gemäß einer weiteren bevorzugten Ausführungsform des Schutzelementes ist das PTC-Widerstandselement auf einen metallischen, vorzugsweise aus Aluminium bestehenden Kühlkörper montiert. Dadurch ist das Schutzelement in der Lage, hohe thermische Dauerleistungen abzuleiten, wie sie beispielsweise im Bremsbetrieb in Zwischenkreisen von Frequenzumrichtern der Antriebstechnik auftreten. Der metallische Kühlkörper dient dem PTC-Widerstandselement zudem als Halterung und gibt dem Schutzelement mechanische Stabilität.
Der metallische Kühlkörper kann ferner vorzugsweise aus einem Strangpressprofil geformt sein, was den Vorteil bringt, dass es möglich ist, das Schutzelement kostengünstig ohne teure Spezialwerkzeuge in großen Stückzahlen zu produzieren. Zudem ist es möglich, auf einfache Weise unterschiedlich hinsichtlich ihrer elektrischen Leistung dimensionierte Schutzelemente herzustellen.

Zur Erhöhung der Wärmeabfuhr an die Umgebung kann das Strangpressprofil vorzugsweise mit Kühlrippen versehen sein. Diese Kühlrippen ermöglichen zudem eine bessere Dimensionierbarkeit des Schutzelementes hinsichtlich seiner thermischen Dauerbelastung.

Eine Montage auf dem metallischen Kühlkörper kann vorzugsweise mittels einer integral mit dem Kühlkörper ausgebildeten Anpresseinrichtung erfolgen, welche eine Pressplatte an das PTC-Widerstandselement anpresst und dieses damit im Kühlkörper fixiert. Durch diese einfache und wirkungsvolle Fixierung wird das PTC-Widerstandselement vor mechanischen Beanspruchungen geschützt und erhält einen stabilen Sitz im metallischen Kühlkörper. Zudem vereinfacht sich der Montageaufwand.

Gemäß einer bevorzugten Ausbildung besteht die integral mit dem Kühlkörper ausgebildete Anpresseinrichtung aus zwei sich in Längsrichtung des Kühlkörpers erstreckenden Stegen, die in etwa U-förmig bis halbkreisförmig gekrümmt sind. Durch diesen integralen Aufbau werden aufwendige zusätzliche Montageeinrichtungen vermieden und außerdem der Wärmeübergangswiderstand vom PTC-Widerstandselement zum Kühlkörper optimiert.

Vorzugsweise wird mit Hilfe von an den Stirnseiten des PTC-Widerstandselementes befindlichen Positionsplatten das PTC-Widerstandselement im Kühlkörper positioniert. Das ergibt den Vorteil, dass je nach Spezifikation ein oder mehrere PTC-Widerstandselemente auf einfache Weise im metallischen Kühlkörper justiert werden können.

Gemäß einer bevorzugten Ausführungsform erhält das Schutzelement einen sandwichartig geschichteten Aufbau. Dieser besteht aus der beschriebenen Anpresseinrichtung, einer Isolierfolie (vorzugsweise Kaptonfolie), die das PTC-Widerstandselement elektrisch vom Kühlkörper isoliert, sowie zwei Kontaktblechen an der Oberseite und Unterseite des PTC-Widerstandselementes.

Dieser sandwichartige Aufbau resultiert in einer kompakten, platzsparenden Ausbildung des Schutzelementes, die es erlaubt, dieses direkt in den Umrichter einzubauen.

Im folgenden wird die Erfindung durch bevorzugte Ausgestaltungen des erfindungsgemäßen Schutzelementes anhand der Figuren näher dargestellt. Es zeigen:
- Figur 1:: das prinzipielle Blockschaltbild eines Frequenzumrichters,
- Figur 2A:: eine Draufsicht eines PTC-Widerstandselementes auf einer Halterung,
- Figur 2B:: einen Querschnitt des PTC-Widerstandselementes nach Fig. 2A,
- Figur 3A:: eine Draufsicht eines PTC-Widerstandselementes auf einem Kühlkörper,
- Figur 3B:: einen Querschnitt des PTC-Widerstandselementes gemäß Fig. 3A.

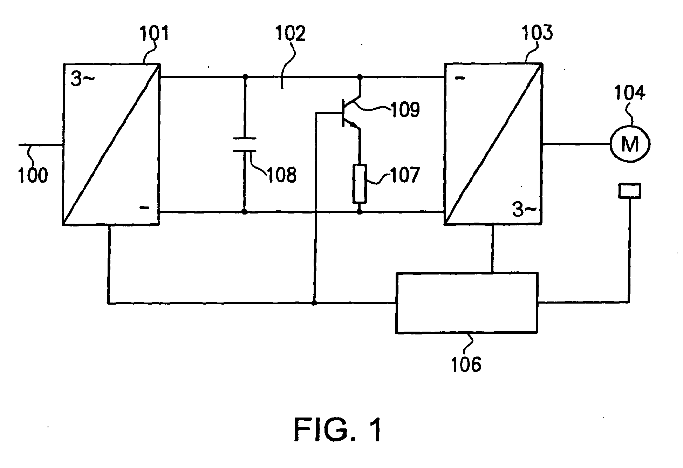

Figur 1 zeigt das prinzipielle Blockschaltbild eines Frequenzumrichters mit einem elektrischen Antrieb. Die dreiphasige bzw. einphasige Netzspannung 100 wird vom Eingangsstromrichter 101 gleichgerichtet. Der Zwischenkreiskondensator 108, der als Energiespeicher und zur Glättung dient, lädt sich auf die Spitzenspannung der Eingangswechselspannung auf. Die Gleichspannung des Zwischenkreises 102 wird vom Umrichter 103 in eine gepulste Rechteckspannung umgewandelt, mit der der Antriebsmotor 104 gespeist wird. Durch entsprechende Modulation kann der Effektivwert und die Frequenz dieser Speisespannung geändert werden und erlaubt dadurch eine sehr feinfühlige Regelung der Drehzahl und des Drehmoments des Antriebsmotors 104. Bei einer Energierückspeisung des Antriebsmotors 104 im generatorischen Betrieb (im Bremsfall des elektrischen Antriebs) wird die überschüssige elektrische Energie, die nicht im Zwischenkreiskondensator gespeichert werden kann, im Bremswiderstand 107, der in diesem Fall dem Zwischenkreis 102 zugeschaltet wird, in thermische Energie umgewandelt. Diese Zuschaltung des Bremswiderstandes 107 erfolgt über einen Transistor 109, der über eine Steuer- und Regeleinrichtung 106 angesteuert wird.

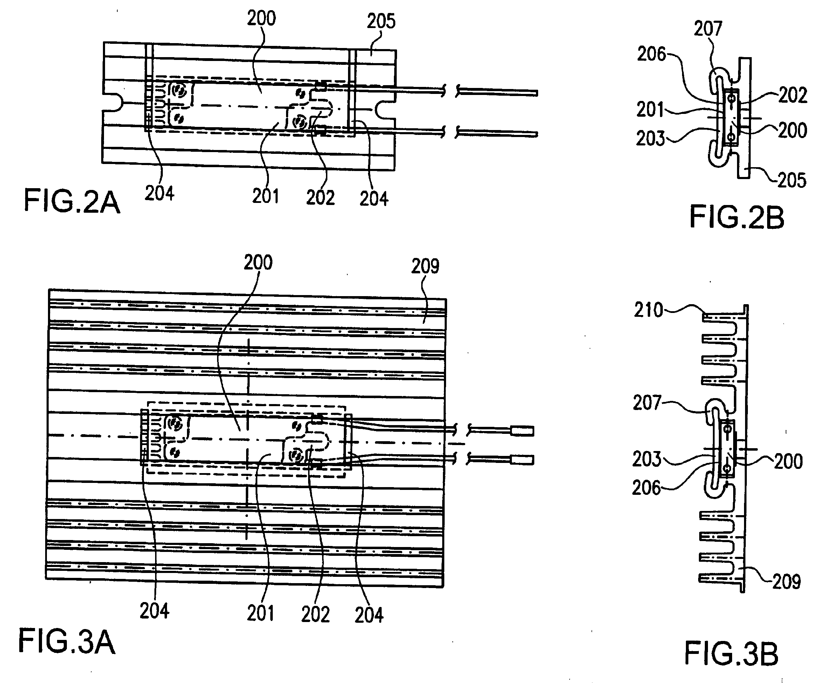

Figur 2A zeigt das PTC-Widerstandselement in einer Halterung 205 montiert. Ein oder mehrere PTC-Widerstandselemente 200 werden durch ein oberes Kontaktblech 201 mit Litze und ein unteres Kontaktblech 202 mit Litze elektrisch anstelle des Ohm'schen Widerstands 107 in Fig. 1 angeschlossen. Die Positionierung des PTC-Widerstandselementes 200 erfolgt mittels zweier an der Stirnseite des Widerstandselements befindlichen Positionsplatten 204.

Figur 2B zeigt den Einbau des PTC-Widerstandselementes in der metallischen, vorzugsweise aus Aluminium bestehenden Halterung 205. Mittels einer Anpressvorrichtung 207, die aus zwei, in etwa U-förmig bis halbkreisförmig gekrümmten Stegen besteht, welche sich in Längsrichtung der Halterung erstrecken, wird eine Pressplatte 203 an das PTC-Widerstandselement in Anlage gebracht und bringt dieses dadurch in engen Kontakt mit der Bodenfläche der Halterung 205. Durch eine Isolierfolie (Kaptonfolie) 206 wird das PTC-Widerstandselement elektrisch von der Pressplatte 203, den Kontaktblechen 201 und 202 sowie der Halterung 205 isoliert. Die beschriebene Ausgestaltung des Schutzelementes wie sie in den Figuren 2A und 2B dargestellt ist, ist für geringe Dauerleistungen (in der Größenordnung von etwa 30 bis 50 Watt) ausgelegt.

Figur 3A zeigt das PTC-Widerstandselement in einer als Kühlkörper ausgebildeten Halterung 209 montiert. Die Positionierung und elektrische Kontaktierung des PTC-Widerstandselementes 200 erfolgt analog wie in Fig. 2A dargestellt.

Figur 3B zeigt einen Querschnitt durch die bevorzugte Ausführungsform des Schutzelementes aus Figur 3A. Ebenso wie in der Ausführungsform, wie sie in den Figuren 2A und 2B dargestellt ist, wird hier ein sandwichartiger Aufbau verwendet um das PTC-Widerstandselement in engen thermischen Kontakt mit dem Kühlkörper 209 zu bringen. Durch diesen Aufbau soll der Zwischenraum zwischen dem PTC-Widerstandselement 200 und dem Kühlkörper 209 vollständig oder nahezu vollständig ausgefüllt werden um eine optimale Wärmeauskopplung vom PTC-Widerstandselement 200 zum Kühlkörper 209 zu erreichen. Mittels einer Anpresseinrichtung analog zu jener in Figur 2B wird dieses Ziel erreicht. Der Kühlkörper 209 besitzt senkrecht zu seiner Bodenfläche abstehende Kühlrippen 210.

## Patentansprüche

1. Schutzelement in einem elektrischen Schaltkreis zur Ableitung von überschüssiger elektrischer Energie mit einem elektrischen Bremswiderstandselement und einem metallischen, vorzugsweise aus Aluminium bestehenden, Kühlkörper (209),
wobei das Bremswiderstandselement aus wenigstens einem PTC-Widerstandselement (200) besteht und mit dem Kühlkörper (209) zu einer kompakten Baugruppe zusammengefügt ist.

2. Schutzelement nach Anspruch 1, **dadurch gekennzeichnet, dass** das PTC-Widerstandselement hinsichtlich seiner Spannungsfestigkeit so ausgebildet ist, dass es in einem Frequenzumrichter zur Ableitung von auftretenden Spannungsspitzen verwendbar ist.

3. Schutzelement nach einem der Ansprüche 1 oder 2, **dadurch gekennzeichnet, dass** das PTC-Widerstandselement eine Spannungsfestigkeit von größer als 600 V aufweist.

4. Schutzelement nach einem der Ansprüche 1 bis 3, **dadurch gekennzeichnet, dass** der Kühlkörper (209) aus einem Strangpressprofil geformt ist.

5. Schutzelement nach Anspruch 4, **dadurch gekennzeichnet, dass** das Strangpressprofil Kühlrippen (210) aufweist.

6. Schutzelement nach einem der Ansprüche 1 bis 5, **dadurch gekennzeichnet, dass** das PTC-Widerstandselement (200) mittels einer Pressplatte (203) und einer Anpresseinrichtung (207), die integral mit dem Kühlkörper (209) ausgebildet ist, fixiert ist.

7. Schutzelement nach Anspruch 6, **dadurch gekennzeichnet, dass** die Anpresseinrichtung (207) aus zwei sich in Längsrichtung des Kühlkörpers erstreckenden Stegen besteht, die in etwa U-förmig bis halbkreisförmig gekrümmt sind und so ausgebildet sind, dass sie die Pressplatte (203), das PTC-Widerstandselement (200) und den Kühlkörper (209) in engem Kontakt halten.

8. Schutzelement nach einem der Ansprüche 1 bis 7, **dadurch gekennzeichnet, dass** das PTC-Widerstandselement (200) mit Hilfe von mindestens einer an der Stirnseite des Widerstandselementes angesetzten Positionsplatte (204) im Kühlkörper (209) positioniert ist.

9. Schutzelement nach einem der Ansprüche 1 bis 8, **dadurch gekennzeichnet, dass** es einen sandwichartig geschichteten Aufbau bestehend aus dem PTC-Widerstandselement (200), einer Pressplatte (203), einer Isolierfolie (206), einem ersten Kontaktblech (201) an der Oberseite des PTC-Widerstandselementes sowie einem zweiten Kontaktblech (202) an der Unterseite des PTC-Widerstandselementes (200) aufweist.

## Claims

1. Protection element in an electric circuit for diverting excess electrical energy with an electrical braking resistor element and a metal, preferably aluminium, heat sink (209), wherein the braking resistor element consists of at least one PTC resistor element (200) and is connected to the heat sink (209) to form a compact assembly.

2. Protection element according to claim 1, **characterised in that** the PTC resistor element is so formed in terms of its electric strength that it may be used in a frequency converter to divert any voltage peaks that may occur.

3. Protection element according to either of claims 1 or 2, **characterised in that** the PTC resistor element has an electric strength of more than 600 V.

4. Protection element according to one of claims 1 to 3, **characterised in that** the heat sink (209) is moulded from an extruded profile.

5. Protection element according to claim 4, **characterised in that** the extruded profile has cooling fins (210).

6. Protection element according to one of claims 1 to 5, **characterised in that** the PTC resistor element (200) is fixed by means of a pressing plate (203) and a pressing device (207), which is formed integrally with the heat sink (209).

7. Protection element according to claim 6, **characterised in that** the pressing device (207) consists of two webs which extend in the longitudinal direction of the heat sink and which are curved approximately in a U-shaped to semi-circular manner and are so formed that they keep the pressing plate (203), the PTC resistor element (200) and the heat sink (209) in close contact.

8. Protection element according to one of claims 1 to 7, **characterised in that** the PTC resistor element (200) is positioned in the heat sink (209) by means of at least one positioning plate (204) applied to the end face of the resistor element.

9. Protection element according to one of claims 1 to 8, **characterised in that** it has a sandwich-like layered construction consisting of the PTC resistor element (200), a pressing plate (203), an isolating foil (206), a first contact plate (201) on the upper face of the PTC resistor element and a second contact plate (202) on the underside of the PTC resistor element (200).

## Revendications

1. Élément de protection dans un circuit de commutation électrique en vue de dissiper l'énergie électrique excédentaire, comportant un élément électrique de résistance de freinage et un corps de refroidissement (209) métallique, réalisé de préférence en aluminium,
dans lequel l'élément de résistance de freinage est formé par au moins un élément de résistance PTC (200) et est assemblé au corps de refroidissement (209) pour former un groupe compact.

2. Élément de protection selon la revendication 1, **caractérisé en ce que** l'élément de résistance PTC, sur le plan de sa résistance à la tension, est réalisé de telle sorte qu'il peut être utilisé dans un convertisseur de fréquences pour dissiper des crêtes de tension générées.

3. Élément de protection selon la revendication 1 ou 2, **caractérisé en ce que** l'élément de résistance PTC a une résistance à la tension supérieure à 600 V.

4. Élément de protection selon l'une quelconque des revendications 1 à 3, **caractérisé en ce que** le corps de refroidissement (209) est formé par un profilé extrudé.

5. Élément de protection selon la revendication 4, **caractérisé en ce que** le profilé extrudé comporte des nervures de refroidissement (210).

6. Élément de protection selon l'une quelconque des revendications 1 à 5, **caractérisé en ce que** l'élément de résistance PTC (200) est fixé au moyen d'une plaque de pression (203) et d'un dispositif d'appui (207) qui est réalisé intégralement avec le corps de refroidissement (209).

7. Élément de protection selon la revendication 6, **caractérisé en ce que** le dispositif d'appui (207) est formé par deux barrettes, qui sont orientées dans le sens longitudinal du corps de refroidissement et qui sont courbées sensiblement en forme de U jusqu'à la forme d'un demi-cercle et sont réalisées de telle sorte qu'elles maintiennent en contact étroit la plaque de pression (203), l'élément de résistance PTC (200) et le corps de refroidissement (209).

8. Élément de protection selon l'une quelconque des revendications 1 à 7, **caractérisé en ce que** l'élément de résistance PTC (200) est positionné dans le corps de refroidissement (209) au moyen d'au moins une plaque de position (204), aboutée à la face frontale de l'élément de résistance.

9. Élément de protection selon l'une quelconque des revendications 1 à 8, **caractérisé en ce qu'**il possède une structure du type sandwich, formée par un élément de résistance PTC (200), une plaque de pression (203), une feuille isolante (206), une première tôle de contact (201) sur le côté supérieur de l'élément de résistance PTC, ainsi qu'une deuxième tôle de contact (202) sur le côté inférieur de l'élément de résistance PTC (200).
